(19) Europäisches Patentamt
European Patent Office
Office européen des brevets

(11) Veröffentlichungsnummer: **0 019 213**
**B1**

(12) **EUROPÄISCHE PATENTSCHRIFT**

(45) Veröffentlichungstag der Patentschrift: **18.05.83**

(51) Int. Cl.³: **C 08 G 18/10,** C 08 G 18/14

(21) Anmeldenummer: **80102520.6**

(22) Anmeldetag: **08.05.80**

# (54) Verfahren zur Herstellung von zelligen Polyurethan-Elastomeren.

(30) Priorität: **21.05.79 DE 2920502**

(43) Veröffentlichungstag der Anmeldung: **26.11.80 Patentblatt 80/24**

(45) Bekanntmachung des Hinweises auf die Patenterteilung: **18.05.83 Patentblatt 83/20**

(84) Benannte Vertragsstaaten: **AT BE CH DE FR GB IT LI NL**

(56) Entgegenhaltungen:
**FR-A-2 002 423**
**FR-A-2 159 530**

(73) Patentinhaber: **BAYER AG, Zentralbereich Patente, Marken und Lizenzen, D-5090 Leverkusen 1, Bayerwerk (DE)**

(72) Erfinder: **Meisert, Ernst, Dr., Am Kiesberg 19, D-5090 Leverkusen 1 (DE)**
Erfinder: **Bohne, Franz-Josef, Ing.-grad., Grossoesinghausen 56, D-5093 Burscheid 2 (DE)**
Erfinder: **Brecht, Klaus, Ing.-grad., Sperberweg 6, D-5067 Kürten (DE)**
Erfinder: **Mormann, Werner, Dr., Odenthaler Strasse 62, D-5090 Leverkusen (DE)**
Erfinder: **Krohn, Wolfgang, Dr., Hahnenweg 2, D-5000 Köln 80 (DE)**
Erfinder: **Henes, Gerhard, Dr., Walter-Flex-Strasse 14, D-5090 Leverkusen (DE)**

EP 0 019 213 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von zelligen Polyurethan-Elastomeren

Die vorliegende Erfindung betrifft ein verbessertes Verfahren zur Herstellung von zelligen Polyurethan-Elastomeren aus Polyisocyanaten, höhermolekularen Polyhydroxylverbindungen und Wasser als Kettenverlängerungs- und Treibmittel. Das neue Verfahren erlaubt die Herstellung von zelligen Polyurethan-Elastomeren höherer Dichte und höherer Wärmestandfestigkeit und vermeidet die bei herkömmlichen Verfahren übermässige Kohlendioxidentwicklung und den dadurch bedingten in den Formen entstehenden hohen Druck.

Von den Polyurethanschaumstoffen unterscheiden sich zellige Polyurethan-Elastomere durch wesentlich höhere Raumgewichte (etwa 0,45 bis 0,8 g/cm³), bessere physikalische Eigenschaften und die dadurch bedingten technischen Anwendungsmöglichkeiten. Zellige Polyurethan-Elastomere werden z.B. für Schuhsohlen oder im Maschinen- und Fahrzeugbau als Pufferelemente eingesetzt und finden wegen ihrer guten thermischen Beständigkeit steigendes Interesse. Aus der Fachliteratur, z.B. aus dem Kunststoff-Handbuch Bd. VII (Polyurethane), herausgegeben von Vieweg und Höchtlen, S. 275 bis 287 ist die herkömmliche Technik der Herstellung von zelligen Polyurethan-Elastomeren bekannt. Nach diesen Verfahren werden höhermolekulare Polyhydroxylverbindungen wie Polyester oder Polyether mit Diisocyanaten zu NCO-Gruppen aufweisenden Voraddukten umgesetzt, die daran anschliessend durch Umsetzung mit Wasser, dem Emulgatoren und gegebenenfalls Aktivatoren zugesetzt sind, zu zelligen Stoffen weiterverarbeitet werden. Das Wasser wirkt dabei sowohl als Kettenverlängerer als auch als Treibmittel.

Um Elastomere mit ausreichenden mechanischen Eigenschaften zu erhalten, ist es bei dieser Verfahrensweise erforderlich, wesentlich mehr Wasser als Kettenverlängerungsmittel einzusetzen, als zur Erreichung der gewünschten Dichte (etwa 0,45 bis 0,8 g/cm³) des zelligen Elastomeren an Treibmittel notwendig wäre. Bei der Kettenverlängerungsreaktion entstehen daher grosse Mengen an überschüssigem Kohlendioxid, so dass es schwierig ist, Formteile mit der genannten hohen Dichte herzustellen. Im Kunststoff-Handbuch Bd. VII, S. 276 wird vorgeschlagen, diese Schwierigkeiten zu vermeiden, indem man Gemische aus Wasser und einem üblichen Glykol-Kettenverlängerungsmittel als Vernetzer einsetzt. Mittels derartiger Rezepturen lassen sich bei geringen Schaumdrücken höhere Raumgewichte erzielen. Die Produkte sind jedoch den nur mit Wasser vernetzten Schäumen im dynamischen Verhalten unterlegen und haben deshalb bisher wenig technische Bedeutung erlangt. Wenn man die mit Glykol-Wassergemischen als Vernetzer hergestellten zelligen Polyurethane zur Besohlung von Schuhwerk einsetzt, dann reicht ihre thermische Beständigkeit nicht aus, um der bei Leistungssportlern auftretenden Erwärmung der Sohle bei raschen Stoppschritten zu widerstehen: Zellige Polyurethan-Elastomere dieser Art beginnen nämlich schon ab 65 °C zu erweichen und erweichen endgültig oft schon bei 120 °C (thermomechanische Analyse und Torsionsschwingversuch).

Ersetzt man andererseits den nicht als Treibmittel erforderlichen Anteil des Wassers in den üblichen Rezepturen für zellige Polyurethan-Elastomere durch eines der an sich bekannten Diamin-Kettenverlängerungsmittel, so läuft die Vernetzungsreaktion viel zu schnell ab, was zu kaum lösbaren verarbeitungstechnischen Problemen führt. Ausserdem werden Produkte mit einer sehr ungleichmässigen Zellstruktur erhalten.

Aufgabe der vorliegenden Erfindung war es somit, ein Verfahren zur Verfügung zu stellen, welches – im wesentlichen unter Beibehaltung der bisher üblichen Rezepturen und mittels der in der Praxis üblichen Verarbeitungseinrichtungen – gestattet, zellige Polyurethan-Elastomere mit relativ hoher Dichte herzustellen, ohne dass beim Verschäumen zu hohe Gasdrucke entstehen. Ausserdem sollte die Wärmestandfestigkeit gegenüber den konventionellen Produkten deutlich erhöht sein.

Überraschenderweise wurde gefunden, dass man die genannten Ziele erreichen kann, wenn man bei der Herstellung der zelligen Elastomere (im Prinzip in einer beliebigen Stufe) sehr kleine Anteile an aromatischen Diaminen mitverwendet. Die Diamine liegen dabei in wesentlich geringerer molarer Menge als das Wasser vor und tragen daher zur Kettenverlängerungsreaktion nur in untergeordnetem Masse bei. Trotzdem werden erhebliche Eigenschaftsverbesserungen erzielt.

Gegenstand der vorliegenden Erfindung ist somit ein Verfahren zur Herstellung eines zelligen Polyurethan-Elastomeren mit einer Dichte von 0,45 bis 0,8, vorzugsweise 0,6 bis 0,7 g/cm³, aus aromatischen Polyisocyanaten, insbesondere Diisocyanaten, Polyhydroxylverbindungen mit einem Molekulargewicht von 400 bis 6000, gegebenenfalls Glykolen mit einem Molekulargewicht von 62 bis 250 und Wasser in geschlossenen, druckstabilen Formen unter Vermeidung von durch übermässige $CO_2$-Entwicklung bedingten, in der Form entstehenden hohen Druck, indem man

a) in einem ersten Schritt aus Polyisocyanaten und einem Teil der höhermolekularen Polyhydroxylverbindungen ein Vorpolymeres mit einem NCO-Gehalt von 10 bis 25 Gew.-% herstellt und

b) das Vorpolymere, gegebenenfalls stufenweise, in einem zweiten Schritt mit dem Rest der höhermolekularen Polyhydroxylverbindungen, den Glykolen und Wasser, gegebenenfalls in Gegenwart eines Katalysators, umsetzt,

wobei die Menge der Glykole 0 bis 4 Mol, bezogen auf 1 Mol der höhermolekularen Polyhydroxylverbindungen, und die Wassermenge 0,3 bis 1 Gew.-%, bezogen auf gesamten Reaktionsansatz, beträgt und, über beide Schritte gerechnet, das Äquivalentverhältnis zwischen Isocyanatgruppen und gegenüber Isocyanaten reaktiven Verbindungen zwischen 0,95:1 und 1,1:1 liegt, welches dadurch gekennzeichnet ist, dass man in einem der Verfahrensschritte 0,1 bis 0,8 Gew.-%, bevorzugt 0,15 bis 0,5 Gew.-%, bezogen auf gesamten Reaktionsansatz, an aromatischen diprimären Diaminen mit einem Molekulargewicht zwischen 108 und 500 mitverwendet.

Wie schon erwähnt, ermöglicht es der erfindungsgemässe Zusatz sehr geringer Mengen an aromatischen Diaminen, Formteile hoher Dichte (bei nur geringem Forminnendruck) und mit erheblich verbesserter Wärmestandfestigkeit herzustellen. Es wird vermutet – ohne dass hierdurch der Schutzumfang der vorliegenden Erfindung eingeschränkt werden soll – dass infolge der sehr schnell ablaufenden Reaktion zwischen Diamin und Polyisocyanat lokale Häufungen von Harnstoffgruppen-Sequenzen entstehen, welche als Keimbildner (Nukleierungsmittel) für die nachfolgende Kohlendioxidabspaltung aus der Isocyanat-Wasser-Reaktion wirken. Durch diese Nukleierung des im Polyol wenig löslichen Harnstoffes wird einerseits eine gleichmässige Schaumbildung erzielt, die Segregation der aus der Isocyanat-Wasser-Reaktion entstehenden Harnstoffe verbessert und anderseits eine Störung der Zellwände hervorgerufen, so dass die Zellwände bei der Treibreaktion rascher aufplatzen. Es entsteht schon vor dem Schliessen der Formen ein erheblicher Gasverlust. Auf diese Weise wird es möglich, Formteile höherer Dichte und hoher Stauchhärte auch in weniger druckstabilen Formen herzustellen.

Überraschenderweise wird jedoch der erfindungsbegründende Effekt nicht erzielt, wenn man als Polyolkomponente solche Verbindungen einsetzt, welche bereits hochmolekulare Polyharnstoffe oder Polyisocyanatpolyadditionsprodukte (insbesondere Polyharnstoffe oder Polyhydrazodicarbonamide) in grösseren Mengen in dispergierter Form enthalten. Derartige Polyole werden z.B. in den DE-Offenlegungsschriften 2 512 385, 2 513 815, 2 550 796, 2 550 797, 2 550 833 und 2 550 862 beschrieben.

Für das erfindungsgemässe Verfahren können im Prinzip beliebige an sich bekannte Polyisocyanate eingesetzt werden. Bevorzugt werden aromatische Diisocyanate wie 1,5-Naphthylendiisocyanat, 4,4'-Diisocyanatodiphenylmethan, 1,3- und 1,4-Phenylendiisocyanat, 2,4- und 2,6-Toluylendiisocyanat sowie deren Gemische angewandt.

Besonders bevorzugt sind dabei 1,5-Naphthylendiisocyanat und insbesondere 4,4'-Diisocyanatodiphenylmethan. Letzteres kann selbstverständlich auch in Form der üblichen technischen Produkte eingesetzt werden, die geringe Mengen an Nebenprodukten (z.B. das 2,4'-Isomere) enthalten.

Als höhermolekulare Polyhydroxylverbindungen werden erfindungsgemäss vorzugsweise durchschnittlich 2 bis 3 Hydroxylgruppen aufweisende Verbindungen vom Molekulargewicht 400 bis 6000, insbesondere 800 bis 4000, eingesetzt, z.B. Polyester, Polyether, Polythioether, Polyacetale, Polycarbonate und Polyesteramide, wie sie für die Herstellung von homogenen und von zellförmigen Polyurethanen an sich bekannt sind:

a) Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. Halogenatome, substituiert und/oder ungesättigt sein.

Als Beispiele für solche Carbonsäuren und deren Derivate seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylenglykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z.B. ε-Caprolacton, oder aus Hydroxycarbonsäuren, z.B. ω-Hydroxycapronsäure, sind einsetzbar.

b) Auch die erfindungsgemäss in Frage kommenden, vorzugsweise zwei bis drei Hydroxylgruppen aufweisenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadiene sind erfindungsgemäss geeignet.

c) Unter den Polythioethern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

d) Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäss geeignete Polyacetale herstellen.

e) Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

f) Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

g) Auch bereits Urethan- oder Harnstoffgruppen enthaltende Polyhydroxylverbindungen sowie gegebenenfalls modifizierte natürliche Polyole, wie Rizinusöl sind verwendbar.

Vertreter der genannten erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben. Selbstverständlich können Mischungen der oben genannten Verbindungen mit mindestens zwei gegenüber Isocyanaten reaktionsfähigen Wasserstoffatomen mit einem Molekulargewicht von 400 bis 10 000, z.B. Mischungen von Polyäthern und Polyestern, eingesetzt werden.

Als niedermolekulare Glykole kommen z.B. die oben in Zusammenhang mit der Herstellung der höhermolekularen Polyole erwähnten Verbindungen in Frage.

Neben Wasser werden erfindungsgemäss geringe Mengen aromatischer Diamine als Kettenverlängerer eingesetzt. Als Beispiele für aromatische Diamine seien Bisanthranilsäureester gemäss den DE-Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäss DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin und durch 1 oder 2 $C_1$–$C_3$-Alkylgruppen substituiertes Toluylendiamin, z.B. 3,5-Diethyl-2,4- bzw. 2,6-diaminotoluol, 4,4'-Diaminodiphenylmethan, und dessen mit 1 bis 4 $C_1$–$C_4$-Alkylgruppen substituierte Derivate, z.B. 3,3'-methyl-4,4'-diaminodiphenylmethan, 3,3,5,5'-Tetraethyl-4,4'-diaminodiphenylmethan, 3,3'-Diisopropyl-4,4'-diaminodiphenylmethan usw., 4,4'-Diaminodiphenyldisulfide (DE-Offenlegungsschrift 2 404 976), Diaminodiphenyldithioether (DE-Offenlegungsschrift 2 509 404) sowie durch Alkylthiogruppen substituierte aromatische Diamine (DE-Offenlegungsschrift 2 638 760) genannt. Als Diamine werden bevorzugt solche eingesetzt, welche in ihrer Struktur analog dem angewandten Diisocyanat sind: So werden Toluylendiamin und substituierte Toluylendiamine bevorzugt für die Umsetzung mit 2,4- und 2,6-Toluylendiisocyanat angewandt, während Vorpolymere auf Basis von 4,4'-Diisocyanatodiphenylmethan bevorzugt mit – gegebenenfalls substituierten – Diaminodiphenylmethanen umgesetzt werden. Naphthylen-1,5-diisocyanat wird vorteilhaft mit 1,5-Diaminonaphthalin kombiniert, aber auch die Kombination von 1,5-Diaminonaphthalin mit 4,4'-Diisocyanatodiphenylmethan ergibt wertvolle Produkte. Überraschend ist, dass schon sehr kleine Mengen des Diamins, bevorzugt 0,15 bis 0,5 Gew.-%, bezogen auf Gesamtpolyurethan, im Sinne der vorliegenden Erfindung wirken.

Das diprimäre Diamin kann im erfindungsgemässen Verfahren dem Reaktionsansatz in einer beliebigen Verfahrensstufe – z.B. vermischt mit einer der Ausgangskomponenten – zugegeben werden. Am zweckmässigsten ist es im allgemeinen, das Diamin in Form einer Lösung in der im 2. Verfahrensschritt verwendeten Teilmenge der höhermolekularen Polyhydroxylverbindung einzusetzen. Es ist dabei oft verfahrenstechnisch vorteilhaft, diese Diaminlösung in einem getrennten Verfahrensschritt mit einer kleinen Menge des verwendeten aromatischen Diisocyanats zu versetzen, wobei das molare Verhältnis Diamin:Diisocyanat zwischen 2:1 und 10:9 liegen soll und infolge der praktisch selektiven Reaktion zwischen NCO- und $NH_2$-Gruppen im Polyol in situ Aminharnstoffe der allgemeinen Formel

$NH_2$–Q'–NH[CO–NH–Q–NH–CO–NH–Q'–NH]$_n$H

in einer Menge von etwa 0,2 bis 1 Gew.-%, bezogen auf Polyurethan, gebildet werden, in welcher

n eine ganze Zahl zwischen 1 und 11 bedeutet,

Q den Rest darstellt, welcher durch Entfernung der NCO–Gruppen aus dem Diisocyanat entsteht und

Q' für den Rest steht, welcher bei der Entfernung der Aminogruppen aus dem Diamin entsteht.

Eine zweite bevorzugte Arbeitsweise besteht darin, das Diamin bereits dem NCO-Präpolymer der 1. Verfahrensstufe, gegebenenfalls schon bei dessen Herstellung, zuzusetzen, wobei ein mit geringen Mengen an Harnstoffgruppen modifiziertes NCO-Präpolymer erhalten wird.

Im erfindungsgemässen Verfahren können auch Katalysatoren der an sich bekannten Art, z.B. tertiäre Amine, wie Triethylamin, Tributylamin, N-Methylmorpholin, Tetramethylethylendiamin, 1,4-Diazabicyclooctan, N,N-Dimethylbenzylamin, N,N-Diethylbenzylamin, Imidazolderivate, Bis-(di-alkylamino)alkylether oder auch organische Metallverbindungen, insbesondere die organischen Zinnverbindungen, zur Beschleunigung der Reaktion mitverwendet werden.

Oberflächenaktive Zusatzstoffe wie Emulgatoren und Schaumstabilisatoren sind für die Herstellung der zelligen Elastomeren zwar nicht erforderlich, können jedoch gegebenenfalls zur Verbesserung der Schaumstruktur zugesetzt werden. Als Emulgatoren kommen oxalkylierte Fettalkohole, aber auch Alkali- oder Ammoniumsalze von Sulfonsäuren in Frage. Flammschutzmittel, Farbstoffe, Stabilisatoren und bakteriostatisch wirksame Substanzen können entsprechend den technischen Notwendigkeiten mitverwendet werden.

Die Verfahrensprodukte werden z.B. als Anschlagpuffer, Federelemente, Radbeläge, Dichtungen, aber auch für die Besohlung von Hochleistungssportschuhen eingesetzt.

Die folgenden Beispiele erläutern das erfindungsgemässe Verfahren. Wenn nicht anders vermerkt, sind Mengenangaben als Gewichtsteile bzw. Gewichtsprozente zu verstehen. Die Versuche wurden, wenn nicht anders angegeben, auf Rührwerksmischmaschinen, wie sie für die Verarbeitung von flüssigen Polyurethansystemen üblich sind (SK-Maschinen der Fa. Hennecke, BRD, und Schuhbesohlungsmaschinen der Fa. Desma, BRD), durchgeführt.

In den Beispielen wird u.a. die Rohdichte der Freischäume vergleichend dargestellt. Die «Freischäume» wurden hergestellt, indem das reaktive Gemisch in Papierbecher mit einem Rauminhalt von 300 ml gefüllt wurde. Nach der Verfestigung wurde die überstehende Schaumkappe abgeschnitten und durch Wägung des Becherinhalts die Rohdichte bestimmt.

Als Formteil wurde eine Platte hergestellt. Die aus Aluminium bestehende Form hatte einen quadratischen Grundriss von 200 × 200 mm, eine Höhe von 10 mm und wurde oben durch eine Aluminiumplatte verschlossen, welche durch Kniehebel auf den 2 cm breiten Rand der Form aufgepresst wurde. Die Rohdichte dieses Formteils wurde in Anlehnung an DIN 53420 festgestellt, Zugfestigkeit und Bruchdehnung in Anlehnung an DIN 53504 bestimmt; die Stosselastizität wurde nach DIN 53512, die Shore-Härte A nach DIN 53505 ermittelt. Die Weiterreissfestigkeit wurde nach DIN 53507 gemessen.

Beispiel 1

Für die Beispiele 1a bis 1e wurde einheitlich ein Voraddukt aus 60 Teilen 4,4'-Diisocyanatodiphenylmethan und 40 Teilen eines linearen Butandiol-1,4/Ethandiol-Polyadipats (Molekulargewicht 2000) angewandt. Der NCO-Gehalt dieses Voradduktes betrug 19%.

a) Vergleichsversuch

Es wurde eine Mischung aus 100 Teilen des genannten linearen Butandiol/Ethandiol-Polyadipats, 0,6 Teilen Wasser sowie 0,5 Teilen Diazabicyclooctan hergestellt. 100 Teile dieser Polyolmischung wurden mit 36 Teilen des Voradduktes intensiv vermischt und in die Form gefüllt. Bei der Herstellung von Platten der Formteildichte 600 kg/m³ wurden erhebliche Mengen des reaktiven Schaumes zwischen Form und Formendekkel ausgetrieben. Die Rohdichte des Freischaumes betrug 142 kg/m³. Die übrigen Messwerte sind in der Tabelle 1 zusammengestellt.

b) Erfindungsgemässes Verfahren

Es wurde eine Mischung aus 100 Teilen des linearen Polyadipats, 0,6 Teilen Wasser, 0,5 Teilen Diazabicyclooctan sowie 0,5 Teilen 4,4'-Diaminodiphenylmethan hergestellt. 100 Teile dieser Polyolmischung wurden mit 37,3 Teilen des Prepolymeren umgesetzt. Es wurde eine Freischaumdichte von 323 kg/m³ gefunden; Formteile der Rohdichte 600 kg/m³ konnten ohne jeglichen Austrieb gefertigt werden. Übrige Messwerte: Tabelle 1.

c) Vergleichsversuch

Es wurde eine Mischung aus 100 Teilen des linearen Polyadipats, 0,45 Teilen Wasser, 7,7 Teilen Butandiol-1,4 sowie 0,6 Teilen Diazabicyclooctan hergestellt. 100 Teile dieser Polyolmischung wurden mit 66 Teilen des Präpolymeren umgesetzt. Die Freischaumdichte betrug 255 kg/m³; Formteile der Rohdichte 600 konnten problemlos hergestellt werden. Allerdings waren sowohl Wärmebeständigkeit als auch Tieftemperaturverhalten sehr schlecht. Die Messwerte sind Tabelle 1 zu entnehmen.

d) Erfindungsgemässes Verfahren

In 100 Teilen des linearen Polyadipats wurden 0,5 Teile Diaminodiphenylmethan gelöst. In die auf 50 °C erwärmte Lösung wurden 0,32 Teile 4,4'-Diphenylmethandiisocyanat eingerührt. Es entstand eine starke Trübung. Dieses modifizierte Polyol wurde mit 1 Teil Wasser sowie 0,4 Teilen Diazabicyclooctan versetzt. 100 Teile dieser Polyolformulierung wurden mit 47 Teilen des Voradduktes zur Reaktion gebracht. Die Freischaumdichte betrug 265 kg/m³. Formteile der Rohdichte 600 konnten in dem vorgegebenen Plattenwerkzeug problemlos gefertigt werden. Die übrigen Prüfwerte sind in Tabelle 1 zusammengestellt.

e) Vergleichsversuch

Es wurde eine Polyolformulierung aus 100 Teilen des linearen Polyadipats, 13 Teilen Butandiol-1,4, 0,4 Teilen Wasser sowie 0,52 Teilen Diazabicyclooctan hergestellt. 100 Teile dieser Polyolformulierung wurden mit 84 Teilen des Voradduktes zur Reaktion gebracht. Die Rohdichte des Freischaumes betrug 270 kg/m³, Formteile der Rohdichte 600 kg/m³ konnten in dem vorgegebenen Plattenwerkzeug problemlos gefertigt werden. Wärme- und Kältebeständigkeit waren jedoch wieder sehr schlecht. Die Messwerte sind in Tabelle 1 zusammengefasst.

Tabelle 1 zeigt insbesondere die wesentlich höhere thermische Beständigkeit der erfindungsgemäss hergestellten Produkte.

Beispiel 2

In den Beispielen 2a bis 2e wurde das gleiche Voraddukt wie in den Beispielen der Reihe 1 verwendet. Es wurden verschiedene Amine in ihrer Wirksamkeit vergleichen.

a) Erfindungsgemässes Verfahren

Es wurde ein Polyolgemisch aus 100 Teilen des linearen Polyadipats, 0,5 Teilen Wasser, 0,5 Teilen Diazabicyclooctan sowie 0,86 Teilen 3,3′-Dicarbethoxy-4,4′-diaminodiphenylmethan hergestellt. 100 Teile dieser Polyolmischung wurden mit 35 Teilen des Voradduktes umgesetzt. Die Freischaumdichte betrug 190 kg/m³. Formteile der Rohdichte 500, 600 und 700 kg/m³ konnten ohne Austrieb hergestellt werden. Messwerte: siehe Tabelle 2.

b) Vergleichsversuch

100 Teile des linearen Polyadipats wurden mit 0,5 Teilen Wasser, 0,5 Teilen Diazabicyclooctan sowie 0,9 Teilen N-Methylethanolamin gemischt. 100 Teile dieser Polyolmischung wurden mit 80 Teilen des Voradduktes umgesetzt. Die Freischaumdichte betrug 139 kg/m³; in der vorgegebenen Form konnten nur Formteile bis zu einer Rohdichte von 550 kg/m³ ohne Austrieb hergestellt werden. Messwerte: siehe Tabelle 2.

c) Erfindungsgemässes Verfahren

100 Teile des linearen Polyadipats, 0,5 Teile Wasser, 0,5 Teile Diazabicyclooctan sowie 0,2 Teile 1,5-Naphthylendiamin wurden gemischt. 100 Teile dieser Polyolmischung wurden mit 35 Teilen des Voradduktes umgesetzt. Die Freischaumrohdichte betrug 230 kg/m³; Formteile von 500 bis 700 kg/m³ konnten ohne Austrieb hergestellt werden. Messwerte: siehe Tabelle 2.

d) Vergleichsversuch

100 Teile des linearen Polyadipats, 0,5 Teile Wasser und 0,5 Teile Diazabicyclooctan wurden gemischt und 100 Teile dieser Mischung mit 35 Teilen des Voradduktes umgesetzt. Die Freischaumrohdichte betrug 160 kg/m³; Formteile der Rohdichte 600 kg/m³ konnten in dem vorgegebenen Plattenwerkzeug nur mit erheblichem Austrieb hergestellt werden. Tabelle 2 zeigt die übrigen Messwerte.

e) Erfindungsgemässes Verfahren

100 Teile des linearen Polyadipats, 0,5 Teile Wasser sowie 0,5 Teile Diazabicyclooctan wurden vermischt und mit 0,86 Teilen eines Gemisches aus 3,3′,5,5′-Tetraethyl-4,4′-Diaminodiphenylmethan und 3,3′,5,5′-Tetraisopropyl-4,4′-Diaminodiphenylmethan (molar 1:1) versetzt. 100 Teile dieser Polyolmischung wurden mit 35 Teilen des Voradduktes zur Reaktion gebracht. Die Freischaumdichte betrug 195 kg/m³. Formteile der Rohdichten 500, 600 und 650 kg/m³ konnten problemlos gefertigt werden. Erst bei Formteilen der Rohdichte 700 kg/m³ wurde schwacher Austrieb festgestellt. Messwerte: siehe Tabelle 2.

Beispiel 3

Es wurde ein Voraddukt aus 80 Teilen eines linearen Polypropylenglykolpolyethers (Molekulargewicht: 2000), 20 Teilen eines verzweigten Polyethers aus Trimetylolpropan und Propylenoxid (Molekulargewicht: 3000) und 4,4′-Diphenylmethandiisocyanat hergestellt. Der NCO-Gehalt dieses Präpolymeren betrug 17%.

a) Vergleichsversuch

Es wurde eine Polyolmischung hergestellt aus 80 Teilen eines linearen Polypropylenglykolethers, der endständig mit Ethylenoxid gepfropft war (Molekulargewicht: 4000), 20 Teilen eines trifunktionellen Polypropylenglykolethers, der endständig mit Ethylenoxid gepfropft war (Mol-Gewicht: 4000), 1 Teil Wasser, 0,2 Teilen Diazabicyclooctan, 0,4 Teilen N-Dimethyl-N-Formylpropylendiamin sowie 0,03 Teilen Dibutylzinndilaurat. 100 Teile dieser Polyolmischung wurden mit 42 Teilen des NCO-Präpolymeren umgesetzt. Die Rohdichte des Freischaumes betrug 128 kg/m³. Der Freischaum zeigte starke Schrumpferscheinungen; es konnte kein formstabiles Formteil hergestellt werden.

b) Erfindungsgemässes Verfahren

Die Polyolmischung aus Beispiel 3a wurde zusätzlich mit 0,5 Teilen 4,4′-Diaminodiphenylmethan versetzt und anschliessend mit 43,5 Teilen des Präpolymeren umgesetzt. Es wurde ein Freischaum der Rohdichte 212 kg/m³ erhalten. Dieser Freischaum zeigte keine Schrumpferscheinungen; Formteile konnten mit Rohdichten von 300 bis 400 kg/m³ hergestellt werden.

c) Erfindungsgemässes Verfahren

Die Polyolmischung aus Beispiel 3a wurde mit 0,5 Teilen 4,4′-Diaminodiphenylether versetzt. Nach Umsetzung mit dem Präpolymeren wurde ein nichtschrumpfender Freischaum erhalten und hochelastische Formteile der Rohdichten 400 und 400 kg/m³ konnten gefertigt werden.

Tabelle 1

| Beispiel | | 1a | 1b | 1c | 1d | 1e |
|---|---|---|---|---|---|---|
| Rohdichte: | | | | | | |
| Freischaum | (kg/m³) | 142 | 323 | 255 | 265 | 270 |
| Formteile | (kg/m³) | 600 | 600 | 600 | 600 | 600 |
| Härte | (Shore A) | ca. 30 | 46 | 45 | 48 | 52 |
| Zugfestigkeit | (MPa) | 5,79 | 9,23 | 7,20 | 9,40 | 12,5 |
| Bruchdehnung | (%) | 628 | 716 | 550 | 698 | 468 |
| Weiterreisswiderstand | (KN/m) | 5,0 | 10,7 | 8,16 | 11,2 | 12,0 |
| Elastizität | (%) | 68 | 68 | 48 | 72 | 43 |
| Dämpfungsmaximum[1] | (°C) | −28 | −28 | −15 | −26 | −12 |
| Thermomechan. Analyse: | | | | | | |
| Beginn der Erweichung | (°C) | 89 | 137 | 65–72 | 136 | 79 |
| Durchschmelzen | (°C) | 156 | 166 | 137 | 159 | 140 |

[1] Torsionsschwingungsversuch nach DIN 53 445

Tabelle 2

| Beispiel | | 2a | 2b | 2c | 2d | 2e |
|---|---|---|---|---|---|---|
| Rohdichte: | | | | | | |
| Freischaum | (kg/m³) | 190 | 139 | 230 | 160 | 195 |
| Formteil | (kg/m³) | 600 | 550 | 600 | 600 | 600 |
| Härte | (Shore A) | 41 | 48 | 45 | 41 | 42 |
| Zugfestigkeit | (MPa) | 7,29 | 6,34 | 7,12 | 9,5 | 7,19 |
| Bruchdehnung | (%) | 679 | 578 | 637 | 654 | 630 |
| Weiterreisswiderstand | (KN/m) | 7,5 | 12,3 | 8,8 | 7,9 | 7,7 |
| Elastizität | (%) | 61 | 42 | 62 | 62 | 59 |
| Dauerbiegeversuch[1] | | 40 000 o.B. | 17 000 zerstört | 40 000 o.B. | 40 000 o.B. | 40 000 o.B. |

[1] Der Dauerbiegeversuch wurde in Anlehnung an DIN 53 522 (Blatt 3) durchgeführt. Nach 40 000 Biegungen wurde die Prüfung abgebrochen. – Keine Risserweiterung = o.B.

**Patentansprüche**

1. Verfahren zur Herstellung eines zelligen Polyurethan-Elastomeren mit einer Dichte von 0,45 bis 0,8 g/cm³ und erhöhter Wärmestandfestigkeit aus aromatischen Polyisocyanaten, Polyhydroxylverbindungen mit einem Molekulargewicht von 400 bis 6000, gegebenenfalls Glykolen mit einem Molekulargewicht von 62 bis 250 und Wasser in geschlossenen, druckstabilen Formen unter Vermeidung von durch übermässige $CO_2$-Entwicklung bedingtem, in der Form entstehenden hohen Druck, indem man

a) in einem ersten Schritt aus Polyisocyanaten und einem Teil der höhermolekularen Polyhydroxylverbindungen ein Vorpolymeres mit einem NCO-Gehalt von 10 bis 25 Gew.-% herstellt und

b) das Vorpolymere, gegebenenfalls stufenweise, in einem zweiten Schritt mit dem Rest der höhermolekularen Polyhydroxylverbindungen, den Glykolen und Wasser, gegebenenfalls in Gegenwart eines Katalysators, umsetzt,

wobei die Menge der Glykole 0 bis 4 Mol, bezogen auf 1 Mol der höhermolekularen Polyhydroxylverbindungen, und die Wassermenge 0,3 bis 1 Gew.-%, bezogen auf gesamten Reaktionsansatz, beträgt und, über beide Schritte gerechnet, das Äquivalentverhältnis zwischen Isocyanatgruppen und gegenüber Isocyanaten reaktiven Verbindungen zwischen 0,95:1 und 1,1:1 liegt, dadurch gekennzeichnet, dass man in einem der Verfahrensschritte 0,1 bis 0,8 Gew.-%, bezogen auf gesamten Reaktionsansatz, an aromatischen diprimären Diaminen mit einem Molekulargewicht zwischen 108 und 500 mitverwendet.

2. Verfahren nach Anspruch 1, dadurch gekennzeichnet, dass das Diamin in Form einer Lösung in der im zweiten Verfahrensschritt verwendeten Teilmenge der höhermolekularen Polyhydroxylverbindung eingesetzt wird.

3. Verfahren nach Anspruch 2, dadurch gekennzeichnet, dass das Diamin durch Reaktion mit einem aromatischen Diisocyanat in einem molaren Verhältnis von Diamin zu Diisocyanat zwischen 2:1 und 10:9 in der Polyhydroxylverbindung in situ zu einem Aminharnstoff der allgemeinen Formel

$$NH_2–Q'–NH[CO–NH–Q–NH–CO–NH–Q'–NH]_nH$$

umgesetzt wird, in welcher

n eine ganze Zahl zwischen 1 und 11 bedeutet, Q den Rest darstellt, welcher durch Entfernung der NCO–Gruppen aus dem Diisocyanat entsteht und

Q′ für den Rest steht, welcher bei der Entfernung der Aminogruppen aus dem Diamin entsteht.

4. Verfahren nach Anspruch 1, dadurch gekennzeichnet, dass das Diamin dem NCO-Vorpolymeren der ersten Verfahrensstufe, gegebenenfalls schon bei dessen Herstellung, zugesetzt wird.

5. Verfahren nach Anspruch 1 bis 4, dadurch gekennzeichnet, dass als aromatisches Polyisocyanat 4,4′-Diphenylmethandiisocyanat und als aromatisches Diamin ein gegebenenfalls am Kern substituiertes 4,4′-Diaminodiphenylmethan eingesetzt werden.

6. Verfahren nach Anspruch 1 bis 5, dadurch gekennzeichnet, dass als aromatisches Polyisocyanat 1,5-Naphthylendiisocyanat und als aromatisches Diamin 1,5-Naphthylendiamin eingesetzt werden.

## Claims

1. Process for the production of a cellular polyurethane elastomer having a density of 0.45 to 0.8 g/cm³ and increased resistance to thermal distortion from aromatic polyisocyanates, polyhydroxyl compounds having a molecular weight of 400 to 6,000, optionally glycols having a molecular weight of 62 to 250 and water in closed pressure-resistant moulds with the avoidance of high pressure forming in the mould caused by an excessive evolution of $CO_2$, by

a) preparing a prepolymer having an isocyanate content of 10 to 25% by weight from polyisocyanates and part of the relatively high molecular weight polyhydroxyl compounds in a first stage and

b) reacting the prepolymer with the remainder of the relatively high molecular weight polyhydroxyl compounds, the glycols and water in a second stage, optionally step-wise and optionally in the presence of a catalyst,

in which process the quantity of glycols is 0 to 4 mol, based on 1 mol of the relatively high molecular weight polyhydroxyl compounds, and the quantity of water is 0.3 to 1% by weight, based on the whole reaction mixture and, calculated over both stages, the equivalent ratio of isocyanate groups to isocyanate reactive compounds is between 0.95:1 and 1.1:1, characterised in that from 0.1 to 0.8% by weight, based on the whole reaction mixture, of aromatic diprimary diamines having a molecular weight of between 108 and 500 are also used in one of the stages of the process.

2. Process according to Claim 1, characterised in that the diamine is used in the form of a solution in the portion of relatively high molecular weight polyhydroxyl compound which is used in the second stage of the process.

3. Process according to Claim 2, characterised in that the diamine is converted in situ in the polyhydroxyl compound into an amine urea of the general formula

$$NH_2–Q'–NH[CO–NH–Q–NH–CO–NH–Q'–NH]_nH$$

in which

n denotes an integer between 1 and 11,

Q represents the group obtained by removal of the NCO groups from the diisocyanate and

Q′ represents the group obtained by removal of the amino groups from the diamine,

by reacting it with an aromatic diisocyanate in a molar ratio of diamine to diisocyanate of between 2:1 and 10:9.

4. Process according to Claim 1, charaterised in that the diamine is added to the isocyanate prepolymer of the first stage of the process, optionally already during the preparation of the prepolymer.

5. Process according to Claim 1 to 4, characterised in that the aromatic polyisocyanate used is 4,4′-diphenylmethane diisocyanate and the aromatic diamine used is 4,4′-diaminodiphenylmethane which may be substituted on the nucleus.

6. Process according to Claim 1 to 5, characterised in that the aromatic polyisocyanate used is 1,5-naphthylene diisocyanate and the aromatic diamine used is 1,5-naphthylene diamine.

## Revendications

1. Procédé de production d'un élastomère en polyuréthane cellulaire ayant une masse volumique de 0,45 à 0,8 g/cm³ et une stabilité dimensionnelle à chaud élevée, à partir de polyisocyanates aromatiques, de composés polyhydroxyliques ayant un poids moléculaire de 400 à 6000, éventuellement de glycols ayant un poids moléculaire de 62 à 250 et d'eau dans des moules fermés stables à la pression, en évitant une haute pression engendrée dans le moule par un dégagement excessif de $CO_2$, dans lequel

a) on prépare dans une première étape à partir de polyisocyanates et d'une partie des composés polyhydroxyliques de poids moléculaire élevé, un prépolymère ayant une teneur en NCO de 10 à 25% en poids et

b) on fait réagir le prépolymère, le cas échéant, graduellement, dans une seconde étape avec le reste des composés polyhydroxyliques de poids moléculaire élevé, les glycols et l'eau, éventuellement en présence d'un catalyseur, la quantité de glycols s'élevant à 0–4 moles par mole de composés polyhydroxyliques de poids moléculaire élevé et la quantité d'eau s'élevant à 0,3–1% en poids, par rapport au mélange réactionnel total, et, calculé pour les deux étapes, le rapport des équivalents entre groupes isocyanates et composés réactifs envers les isocyanates se situe entre 0,95:1 et 1,1:1, caractérisé en ce qu'on utilise en même temps dans l'une des étapes du procédé 0,1 à 0,8% en poids, par rapport au mélange réactionnel total, de diamines diprimaires aromatiques ayant un poids moléculaire de 108 à 500.

2. Procédé suivant la revendication 1, caractérisé en ce qu'on utilise la diamine sous la forme d'une solution dans la quantité partielle de composé polyhydroxylique de poids moléculaire élevé utilisée dans la seconde étape du procédé.

3. Procédé suivant la revendication 2, caractérisé en ce qu'on transforme la diamine par réaction avec un diisocyanate aromatique dans un rapport molaire de la diamine au diisocyanate de 2:1 à 10:9 dans le composé polyhydroxylique in situ en une amino-urée de formule générale:

$$NH_2{-}Q'{-}NH[CO{-}NH{-}Q{-}NH{-}CO{-}NH{-}Q'{-}NH]_nH,$$

dans laquelle

n est un nombre entier compris entre 1 et 11,

Q représente le reste qui est formé par élimination des groupes NCO du diisocyanate et

Q' représente le reste qui est formé par élimination des groupes amino de la diamine.

4. Procédé suivant la revendication 1, caractérisé en ce que la diamine est ajoutée au prépolymère NCO de la première étape du procédé, déjà, le cas échéant, pendant sa préparation.

5. Procédé suivant les revendications 1 à 4, caractérisé en ce qu'on utilise comme polyisocyanate aromatique le 4,4'-diisocyanatodiphénylméthane et comme diamine aromatique un 4,4'-diaminodiphénylméthane éventuellement substitué sur le noyau.

6. Procédé suivant les revendications 1 à 5, caractérisé en ce qu'on utilise comme polyisocyanate aromatique le 1,5-diisocyanatonaphtalène et comme diamine aromatique le 1,5-diaminonaphtalène.